# EUROPEAN PATENT APPLICATION

(11) **EP 3 131 167 A1**
(43) Date of publication of application: **15.02.2017**
(21) Application number: 16165186.4
(22) Date of filing: 13.04.2016
(51) Int. Cl.: H02J 1/14

(54) **POWER MANAGEMENT SYSTEM**

(30) Priority: 13.04.2015 NZ 70693615
(71) Applicant: Phitek Systems Limited, Auckland 1023 (NZ)
(72) Inventor: Greig, Nigel, PT Chevalier Auckland 1032 (NZ); Oosthuysen, Helgard, Botany Downs Auckland 2010 (NZ)
(74) Representative: Richardson, Mark Jonathan

(57) **Abstract**

A power management system for a plurality of power outlets (4) in a passenger vehicle, the system comprising: identification means for identifying characteristics of a device associated with one of the plurality of power outlets (4), and control means (9) for controlling the power available to the associated power outlet (4), wherein the control means (9) controls the power available to the associated power outlet (4) based on the identified characteristics.

## Description

### Field of the Invention

The present invention relates to a power management system for an environment, such as an aircraft, having a limited power budget.

### Background

In general aeroplanes generate an electrical power supply for the plane from their turbines. While this system can provide a large amount of power there is a trade-off between the power generated and the weight of the power conversion and distribution apparatus required. This means that there is typically a strict power budget on board a plane and there must be a form of management to ensure this is not exceeded.

The power budget issue is problematic in current aeroplanes because there is an increasing number of apparatus requiring power, whether tethered to the airframe such as the seat controls or in-flight entertainment (IFE) systems or devices brought on to the plane by passengers, such as phones, tablets or PCs. Each passenger may plug in additional devices and expect to have a power supply to operate with.

Modern devices can be power hungry and will often establish the maximum power they can draw from a system. For instance a mobile device may ask for increasing power to be supplied until the system is unable to supply the power request. This establishes the maximum power available to the phone and it may operate at, or just under this value. This obtains a maximum power for the phone, but draws a power well above that necessary for the phone's operation and puts additional stress on the power supply.

### Objects of the Invention

It is an object of the invention to provide a power apparatus and/or method which manages the power budget more effectively when a plurality of devices may be drawing power. The invention is preferably implemented in a passenger vehicle such as an aeroplane.

It is a further object of the invention to at least go some way to overcoming disadvantages of existing systems, or which will at least provide a useful alternative to existing systems.

Further objects of the invention will become apparent from the following description.

### Summary of Invention

Accordingly in one aspect the invention may broadly be said to consist in a power management system for a plurality of power outlets in a passenger vehicle, the system comprising:
Identification means for identifying a device associated with one of the plurality of power outlets,
Control means for controlling the power supplied by the plurality of power outlets,
Wherein the identification means identifies power characteristics of the device and the control means controls the power supplied in relation to the identified power characteristics.

The identification of how a device wants to draw power from a system, or how it tests system power, is used to improve the better control of the competing demands of a plurality of power outlets. An advantage of this system is that the power is not split or controlled between users based on demand or proportionally, but instead based on need.

In an embodiment the identification means identifies the specific device model or model type associated with the power outlet.

In an embodiment the identification means comprises a look-up table including specific device models and their electrical characteristics.

In an embodiment the identification means is an application associated with the device.

In an embodiment the identification means uses data from the enumeration process such as the vendor ID and product ID.

In an embodiment the look-up table contains the minimum power requirements of devices.

In an embodiment the look-up table is stored in a memory means or accessed on a server or through the internet or wireless connection.

In an embodiment the control means and identification means are associated with a seat electronics box.

In an embodiment the control means and identification means may be associated with a plurality of power outlets.

In an embodiment the identification means uses a lower power connection or power level.

In an embodiment the identification means may be through a wired or wireless connection.

In an embodiment the identification means may monitor the power flow through the power outlet.

In an embodiment the power supplied is dependent on or proportional to the power available to the system.

In an embodiment the power supplied is dependent on the minimum power required by the device.

In an embodiment the power supplied is adjustable by the control system, for instance based on an external input by a user or staff member.

In an embodiment the power outlets are associated with an aircraft.

In an embodiment the control means controls an electrical characteristic of the power outlet to control the power supplied by the power outlet.

In an embodiment the control means controls an electrical characteristic of the power outlet to control the power demanded or taken by the associated device.

In an embodiment the power outlet is adapted to appear as one of a plurality of power outlet types.

In an embodiment the power outlet is adapted to switch between power outlet type after identification of a device.

In an embodiment control means is adapted to disconnect and reconnect to a device when a switch of power outlet type is to occur.

In an embodiment the electrical characteristic is a voltage, such as the voltage rails.

In an embodiment the control means controls an electrical characteristic of the power outlet differently for different devices with similar power requirements.

In an embodiment the control means controls a different electrical characteristic, or control an electrical characteristic in a different way dependent on the identified device.

In an embodiment the control means monitors the power supplied at a plurality of times while a device is connected and adjusts the supplied power as required.

In an embodiment the power connections are USB connections.

According to a second aspect, the invention may broadly be said to consist in a seat electronics box associated with a plurality of power connections, the seat electronics box comprising:
a power supply to supply power to the plurality of power connections;
an identification means adapted to identify devices connected to any one or more of the power outlets; and
a control means to control the power supplied or an electrical characteristic thereof.

According to a third aspect, the invention may broadly be said to consist in a method of managing power in a power system having a plurality of power connections, the method comprising the steps of:
Identifying a device connected to one or more of the power connections;
Identifying the power requirements of the device; and
Supplying power to the power connection dependent on the power requirements of the device.

In an embodiment the method comprises the step of changing the power supplied to at least one of the power connections dependent on the power usage in the power system.

In an embodiment a control means estimates the available power to the system and adjusts the supplied power.

In an embodiment the step of identifying a device comprises enumerating the device to obtain the specific model of the device.

According to a fourth aspect the invention may be broadly be said to consist in an airplane power system comprising:
A power supply for supplying power to the airplane,
A plurality of power connections for supplying power to connectable devices,
A control means for controlling the supply of power from the power supply to the plurality of power connections,

Wherein the control means adjusts the power supplied to at least one of the plurality of power connections after determining the device connected to the power connection.

In an embodiment determining the device comprises enumeration of the power connection.

In an embodiment determining the device comprises identifying the device by its electrical demands and/or handshake.

In an embodiment to power system comprises one or more power converters to provide low voltage DC power to the power connections.

In an embodiment the power system comprises a power converter from an AC supply to a first DC voltage. Preferably that voltage is substantially 28V.

In an embodiment the power system comprises a power converter from an first DC voltage to a second DC voltage wherein the second DC voltage is substantially the DC voltage of the power connections. Preferably this voltage is substantially 5V or a standard USB voltage.

In an embodiment the DC power converter is located in a seat electronics box.

In a further aspect the invention may broadly be said to consist in a power management system for a plurality of power outlets, the system comprising:
Identification means for identifying a device associated with one of the plurality of power outlets,
Control means for controlling the power requested by the plurality of devices, Wherein the identification means identifies power characteristics of the device and the control means controls the power supplied in relation to the identified power characteristics.

In an embodiment the power requested is controlled by identifying characteristics of how the device decides to request power and adjusting the characteristics of the power outlet.

The above embodiments should be considered to apply to any of the above aspects where suitable.

The disclosed subject matter also provides power supply apparatus and/or methods which may broadly be said to consist in the parts, elements and features referred to or indicated in this specification, individually or collectively, in any or all combinations of two or more of those parts, elements or features. Where specific integers are mentioned in this specification which have known equivalents in the art to which the invention relates, such known equivalents are deemed to be incorporated in the specification.

Further aspects of the invention, which should be considered in all its novel aspects, will become apparent from the following description.

### Drawing Description

A number of embodiments of the invention will now be described by way of example with reference to the drawings in which:
**Fig. 1** is an embodiment of the power system architecture 1 of the invention.
**Fig. 2** is a schematic diagram of an embodiment of a SEB.
**Fig. 3** is a flowchart of an embodiment of a control method for a power outlet.
**Fig. 4a and 4b** shows alternative communication arrangements for an embodiment of the system.
**Fig. 5** is a cutaway diagram of an aeroplane showing an embodiment of the invention

### Detailed Description of the Drawings

Throughout the description like reference numerals will be used to refer to like features in different embodiments.

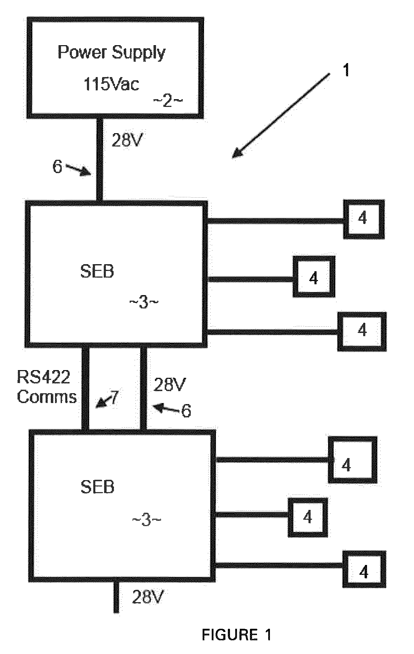

Figure 1 is an embodiment of the power system architecture 1 of the invention. The power supply unit (PSU) 2 receives an AC power supply. This may be from an aircraft turbine generator or other source. The power supply converts this to a DC signal. In a preferred embodiment this conversion is to 28 Volts DC which is supplied to each of the seat electronics boxes (SEBs) 3 along connections 6 such as cables. An advantage of supplying each of a plurality of SEBs 3 with a DC voltage is that it removes the need for a heavy power converter in each of the SEBs. A high DC voltage also reduces the thickness (therefore weight) of the cable 6. The DC voltage may be 28V, which can be reduced at the SEB, or a lower voltage, such as 5V or 3.3V, which is provided directly to user devices

Each of the SEBs 3 may control a plurality of seats or power units. In a preferred embodiment each SEB 3 controls a row of seats or a seat unit, typically 3-5 seats per SEB. Each SEB is connected to one or a plurality of power outlets 4 by connections 5, preferably power cables. The power outlets 4 may be USB jacks, powered headphone plugs or other power connections, preferably for connection of external devices. The power outlets are connectable to user devices 61, or other devices requiring power.

The power cables 5 provide power substantially at the voltage required by the power outlet 4 (although as described later this may be controlled by the system). In the embodiment shown power is supplied by the SEB at a nominal 5V. An advantage of the SEB converting the voltage is that the power outlets have a reduced number of parts and may essentially be dumb terminals. This reduces the chances of the terminals 4 breaking and makes them cheaper and easier to replace if they do malfunction. In embodiment of the invention a communications means 7 provides a communication link or signal between the SEBs. The communication means 7 may be wired or wireless but is shown as an RS422 communication line.

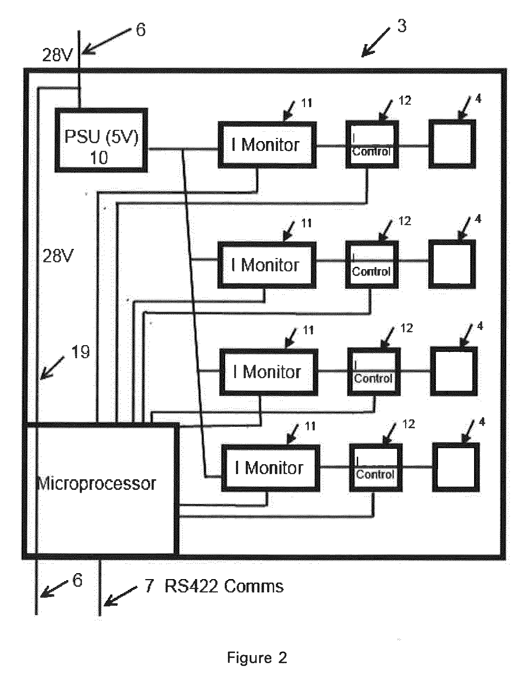

Figure 2 shows a schematic diagram of an embodiment of a SEB 3 as introduced in Figure 1. The SEB has a 28V DC to 5V DC USB power converter or supply 10. This provides more efficiency in terms of power loss, weight and cost than having the conversion in every seat. It may also convert 115V AC to 5V DC conversion which eliminates the requirement of upstream DC power conversion at the PSU 2 or in an embodiment may be supplied directly at 5V. The SEB 3 apportions power to each of the connected power outlets 4. The apportioning is controlled by a control means 9, which may be a microprocessor, logic circuit or other means of electronic decision making. In some embodiments the control means may be external from a particular SEB 3 for instance a single control unit may be used or one of the plurality of SEBs 3 may provide the control means for the plurality of SEBs. The SEBs 3 have a monitoring means, such as a current monitor 11 and an electrical control means 12. This enables an electrical characteristic, such as the current, to be monitored and adjusted for each of the USB power outlets. In an embodiment a monitor 11 or control 12 may be associated with a plurality of power outlets.

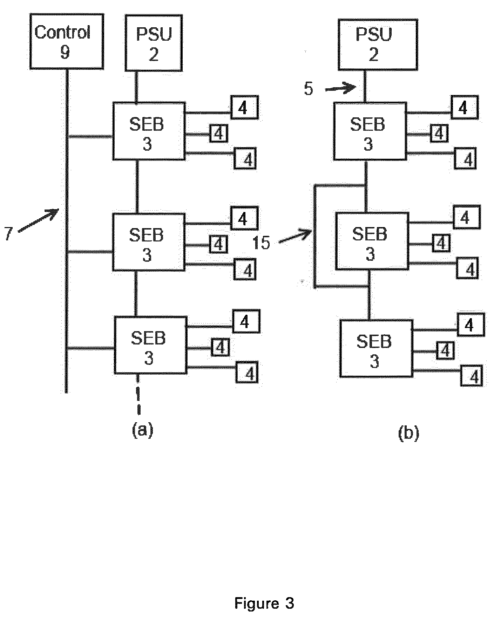

Figure 3 shows a flowchart of an embodiment of a control method for a power outlet 4. The control method uses enumeration over the USB connection to determine the specific passenger device connected to the power outlet 4 or jack. The enumeration process identifies the specific device, or possible range of devices that is connected to the power outlet 4. For instance the USB standard uses a low power handshake or enumeration stage, where the power is limited to around 100mV, to identify the device and decide whether the power able to be drawn by the USB port can be increased as required by the device. A typical embodiment involves the plugged in device (e.g. a phone) supplying identifying data such as a vendor ID and a product ID to identify the manufacturer or producer (e.g. Apple™ or Samsung™) and then a particular device model(e.g. Ipad™ or Galaxy™). The controller or host may also supply identifying data such as a host ID to the device. This information allows the host or controller to configure the correct driver or environment for the device. It may also allows a greater power transfer rate to be established. Embodiments of the system may identify only a class or type of device (e.g. tablet, phone, laptop) or a power requirement type. Further embodiments may identify a specific model but apply one of a plurality of power characteristics based on the class of the device model.

In a preferred embodiment the controller 13 comprises, or is able to obtain a list of devices and their power requirements, limits and/or characteristics. For instance a look-up table may be stored on the device or in an accessible cloud environment. Then the controller may, after identifying the device, change the way that the power is supplied so as to reduce power usage. For instance a phone may typically use an operating current of 0.6A, but the phone may request a higher current of 0.8A. Importantly the phone may be operable with a minimum current of 0.3A. If this information is available to the controller it can, depending on the available system power, adjust the supplied power to achieve an appropriate balance between power usage and passenger experience. Alternative systems may be used to obtain or retrieve device specific information. For example an internet connection or access to a central driver or data hub may be provided to identify devices. This may assist with keeping the device information up to date. In another embodiment a dynamic system may be used in which a program or application on the device is used to provide the necessary information. In this case the program may make further features available to a user, such as purchasing or system and/or travel information.

A straightforward means of controlling the supplied power may be to drop the supply voltage, or the voltage rails. By slowing dropping the voltage and monitoring the current the point at which the device stops operating the minimum power point may be obtained. However many advanced devices have dynamic power systems that attempt to draw the maximum amount of power from a system, for instance by testing the system to check if more power is available. To ameliorate or overcome the adaptive power requirements the device information table may include power and/ charging characteristics of the phones. For instance this may include information on how the phone reacts to changes in supplied power, or the expected reaction of the phone to changes in supplied power. In an example a tablet may begin by requesting 600mV, however this request may be increased until it notices a drop in the power supplied at 750mV. To counteract the action of the phone the controller can artificially lower the voltage apparent to the device. In some cases it may be required to lower the voltage is such a way that the phone responds correctly. Although the above has been described with regard to the initial connection process there may be a continuous monitoring of the power used and power budget and adjustment of the available power.

In some embodiments the type of power outlet or jack may be altered. That is to say the power outlet may be able to appear as a plurality of possible power outlet types and the choice of power outlet used may depend on the device power requirements, or the power available to the plane. For example the USB standard includes at least 3 ports, a standard downstream port (SDP), a charging downstream port (CDP) and a dedicated charging port (DCP). A device connected to each of these jacks must determine which jack it is connected to, typically by testing the USD data lines (D+ and D-) and whether they can handshake, are grounded through a resistor or are shorted. A device can recognize a SDP with hardware by detecting that the USB data lines, D+ and D-, are separately grounded through 15kQ but it still needs to enumerate to be USB compliant. A device plugged into a CDP can recognize the jack as such by means of a hardware handshake implemented by manipulating and monitoring the D+ and D- lines. (See USB Battery Charging Specification, section 3.2.3.) The hardware test takes place before turning the data lines over to the USB transceiver, thus allowing a CDP to be detected (and charging to begin) before enumeration. They are identified by a short between D+ to D-. This allows the creation of DCP "wall warts" that feature a USB mini or micro receptacle instead of a permanently attached wire with a barrel or customized connector. Such adapters allow any USB cable (with the correct plugs) to be used for charging.

Each plug can provide different power requirements, SDP provides between 2.5mA, 100mA and 500ma, a CDP provides up to 900mA to 1.5A and A DCP provides 500mA to 1.5A without data. In a particular embodiment of the invention the power outlet is able to appear as any one of the USB power outlet types (e.g. by changing the electrical connections of the data pins). In a first stage it may connect as a CDP to ascertain the power needs or state of the device. If a lower power is required the device then disconnects, changes the apparent power outlet type, and reconnects as, for instance an SDP. The disconnection is preferably electrical only, maintaining the electrical connection. This change of plug type may reduce the power the device attempts to draw. In other embodiments a disconnect may occur if the system has to make a large change to the amount of power supplied to a device.

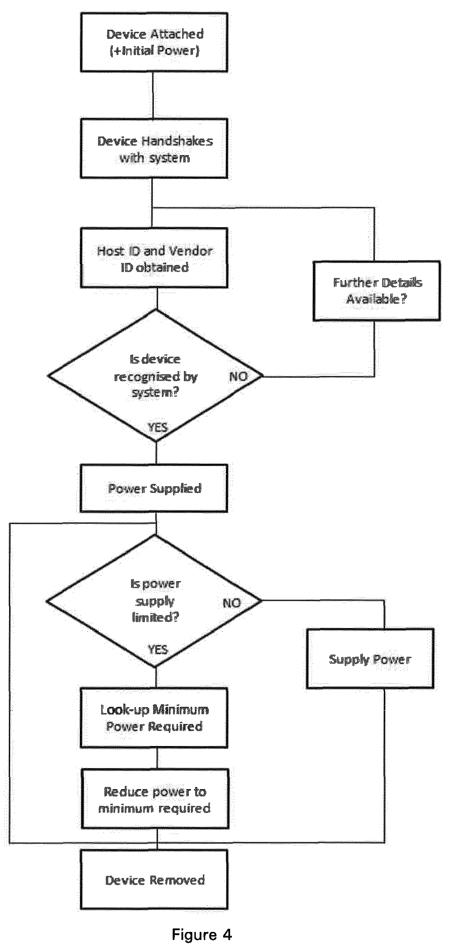

Figure 4 shows alternative communication means arrangements for the system. Figure 4a shows a separate communication means 7 with a control 9 which controls each of the SEBs power decisions. This has the advantage that full knowledge of the system status is available to the control means and an optimum power management can be calculated in an efficient way. The control means may alternatively be dispersed in each of the SEBs with the communication means providing a pathway to share information between them. An alternative embodiment, shown in figure 4b, does not have a separate communication means but relies on the power connections 5. In this case a communications signal may be carried or transferred along the power connections 5 or the characteristics of the power flow may be measured to determined demand in SEBs along the daisy chain connection. Again a separated or spread/dispersed control means may be used. Although the connections are preferably wired they may be wireless in some circumstances.

The power management is preferably for each seat; however the seats may be grouped, for instance, into a row. If the current per USB jack or per seat row is too high the microcontroller manages the current by slowly dropping the voltage (e.g. 5V nominal) for that specific seat or seats to below the USB spec and/or until the device draws less current. In some embodiments there may be some other characteristic such as current or impedance which is modified. The microcontroller may also vary the voltage or current based on the requirements it asserts each identified passenger device needs. This is done to provide the maximum amount of charging to each passenger device in each seat without overloading the system which is normally designed for less than 100% passenger charging uptake. The control means determines the current available to a row of seats by knowing the total power available at its own power input (supplied from upstream) minus the power it measures used by other SEB's downstream. This information could be supplied along the communication means 7. The different SEBs will settle at an agreed current value (power usage) for each SEB until a new device is plugged in or removed or adjusted. When this occurs the SEB's will resettle at a different available current for each SEB 5 or jack 4. The system, or control means for the system, may therefore be located in the SEB and receive inputs from the plurality of jacks. In other embodiments the control means received control inputs regarding the amount of power available and increase or reduce the supply to a particular user, or power outlet, or group of power outlets as required.

The control means or communication means may also be used to determine faults in the system. Each SEB may have a fault bypass subsystem 15 to ensure that a faulty SEB does not affect the remaining SEBs. The control means may comprise a monitoring means or measurement means and an adjustment means, as well as a transceiver means to communicate along the communication means. The operation of the control means may vary depending on the loading of the system. For instance when an aircraft is full the loading may be very high which requires that the minimum power is supplied to each of the devices. In some cases the control means may have to limit the number of connections to allow sufficient power to be supplied to the highest priority connections. Alternatively if the loading is low, because of an empty plane or an overnight trip then the control means 9 may increase supply, or supply as much power as possible to the power outlets 4.

In an embodiment the control means has advanced options for controlling the power available to the outlets 4. The control means 9 may adjust the available power depending on the other power usage of a passenger. Therefore the power budget may reflect not only the outlet power but also the IFE or seat electronics power. This may provide more power to the device of a user who is using a personal device instead of the IFE screen when compared to a user using both a personal device and IFE screen. A similar trade-off may be made in relation to the lighting, audio, or other SEB power requirements. In further embodiments the control means 9 is adjustable by external inputs. For instance a staff control or a program or application may be able to adjust the priority of power supply for one, or a group, of SEBs. In one example the business class seats may have a greater priority and maximum supply setting than economy class. In a second example a mobile app or on-plane purchase may allow a user to request greater power or priority over other users. This may enable passengers who require high power usage, such as laptop device users to ensure they have enough power.

In embodiments of the system there may be a communication means to a user device that enables improved control of the power usage or selection of the power requirements. The communication means may be wired or wireless and the communication may be controlled by the power outlet or by the user device. In a first example the user may download, or otherwise install or obtain, an application on their personal device 61. The application contains a power management system which is able to prepare a summary of the power requirements of the user device and provide this to the power control system. For instance the application may have access to the power systems of the phone and knowledge of the battery state, or the minimum charging requirements. The application may also have access to phone settings, so as to adjust the characteristics of the phone's power usage to reduce power usage when required. In embodiments this is based on signals received from the power control system. The communication between the application and the power control system may use the connection to the jack 4, or may use an alternative system such as, Bluetooth, Wi-Fi or other wireless connection. The application may have additional features, such as providing information to the passenger, or flight details and check-in information and/or processing. In further embodiments the application may allow a user to purchase, or otherwise increase, the power supplied to their device.

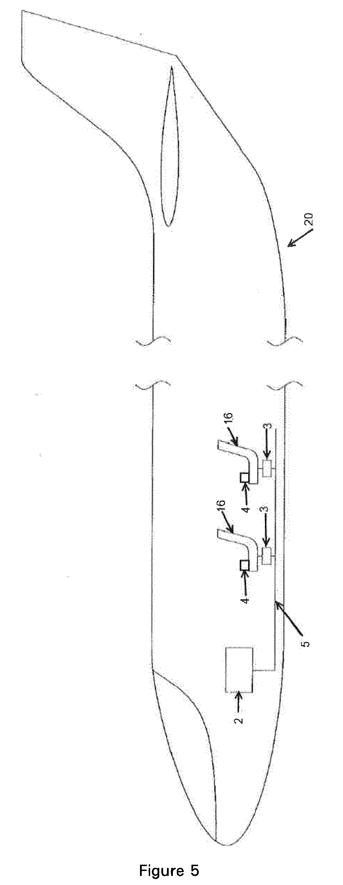

Figure 5 shows a cutaway diagram of a plane 20 showing an embodiment of the invention in place. The plane has multiple rows of seats 16. Each seat or group of seats has an associated SEB 3 which supplies power and communication signals to various aspects of the seats including power outlets 4. A central power supply unit 2 and central communications unit or IFE control centre may also be present on the plane.

From the foregoing it will be seen that a method and apparatus is provided which allows dynamic control of the power supplied to passengers in order to balance the power budget on an aircraft or similar.

The present invention may be described in terms of functional block components and various processing steps. Such functional blocks may be realized by any number of hardware and/or software components configured to perform the specified functions. For example, the present invention may employ various integrated circuit components, e.g., memory elements, processing elements, logic elements, look-up tables, and the like, which may carry out a variety of functions under the control of one or more microprocessors or other control devices. Similarly, where the elements of the present invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the present invention could employ any number of conventional techniques for electronics configuration, signal processing and/or control, data processing and the like.

Unless the context clearly requires otherwise, throughout the description, the words "comprise", "comprising", and the like, are to be construed in an inclusive sense as opposed to an exclusive or exhaustive sense, that is to say, in the sense of "including, but not limited to".

Although this invention has been described by way of example and with reference to possible embodiments thereof, it is to be understood that modifications or improvements may be made thereto without departing from the scope of the invention. The invention may also be said broadly to consist in the parts, elements and features referred to or indicated in the specification of the application, individually or collectively, in any or all combinations of two or more of said parts, elements or features. Furthermore, where reference has been made to specific components or integers of the invention having known equivalents, then such equivalents are herein incorporated as if individually set forth.

Any discussion of the prior art throughout the specification should in no way be considered as an admission that such prior art is widely known or forms part of common general knowledge in the field.

## Claims

1. A power management system for a plurality of power outlets in a passenger vehicle, the system comprising:
Identification means for identifying characteristics of a device associated with one of the plurality of power outlets,
Control means for controlling the power available to the associated power
outlet,
Wherein the control means controls the power available to the associated power outlet based on the identified characteristics.

2. A power management system as claimed in claim 1 wherein the identified characteristics comprise a class of device or a device model associated with the power outlet.

3. A power management system as claimed in either one of claims 1 or 2 wherein the identification means comprises a look-up table including device characteristics.

4. A power management system as claimed in any one of claims 1 to 3 wherein the identification means comprises an application associated, at least in part, with the device.

5. A power management system as claimed in any one of claims 1 to 4 wherein the identified characteristics comprise a vendor ID and/or product ID of the device.

6. A power management system as claimed in any one of claims 1 to 5 wherein the control means and identification means are associated with a seat electronics box.

7. A power management system as claimed in any one of claims 1 to 6 wherein the control means and identification means control and/or identify the power supplied to and/or the identification at a plurality of power outlets.

8. A power management system as claimed in any one of claims 1 to 7 wherein the identification means monitors the power flow through the power outlet.

9. A power management system as claimed in any one of claims 1 to 8 wherein the power outlet is adapted to appear as one of a plurality of power outlet types based on the identified characteristics.

10. A power management system as claimed in any one of claims 1 to 9 wherein the power available is controlled by adjusting a voltage available to the power outlet.

11. A method of managing power in a power system having a plurality of power connections, the method comprising the steps of:
Identifying a device connected to one or more of the power connections;
Identifying the power requirements of the device; and
Supplying power to the power connection dependent on the identified
power requirements of the device;
Wherein the method is able to control the power usage of the power system.

12. A method as claimed in claim 11 wherein the step of identifying the device comprises the steps of:
Measuring an electrical characteristic of the connection; and
Comparing the measured electrical characteristics with a plurality of known device characteristics.

13. A method as claimed in either one of claims 11 or 12 comprising the step of changing the power supplied to at least one of the power connections dependent on power usage in the power system.

14. A method as claimed in any one of claims 11 to 13 comprising the step of enumerating the device to obtain the specific model of the device.

15. A method as claimed in any one of claims 11 to 14 comprising the step of controlling the voltage of the power supplied to the power connection.
